# EUROPÄISCHE PATENTANMELDUNG

(11) **EP 1 704 965 A1**
(43) Veröffentlichungstag der Anmeldung: **27.09.2006**
(21) Anmeldenummer: 05006553.1
(22) Anmeldetag: 24.03.2005
(51) Int. Cl.: B24D 3/00

(54) **Schleifmittelzusatz**

(71) Anmelder: Solvay Fluor GmbH, 30173 Hannover (DE)
(72) Erfinder: Pakusch, Axel, 34146 Hann. Münden (DE); Pischtiak, Anja, 30451 Hannover (DE); Schwarze, Thomas, 31275 Lehrte (DE)
(74) Vertreter: Jacques, Philippe

(57) **Zusammenfassung**

Die Erfindung betrifft ein Schleifmittelzusatz für ein Schleifmittel. Das Schleifmittel besteht im allgemeinen aus Unterlage, Schleifkorn und Bindemittelsystem. Zur Verbesserung der Schleifwirkung und der Standzeit der Schleifmittel enthält das Bindemittelsystem erfindungsgemäß synthetische Alkalimetall- und/oder Erdalkalimetallfluoroaluminate, insbesondere Alkalimetalltetrafluoraluminat, vorzugsweise Kaliumtetrafluoraluminat als schleifaktiven Füllstoff.

## Beschreibung

Die Erfindung betrifft ein Schleifmittelzusatz, insbesondere die Verwendung von anorganischen Fluoriden als schleifaktive Füllstoffe in Schleifmitteln.

Es ist bekannt, daß die Oberflächen von Gegenständen, Werkstücken, Bauteilen oder ähnlichen Konstruktionen aus Holz, Metall, Metalllegierungen, Kunststoff, Keramik, Stein oder anderen Materialien unter Verwendung von Schleifmitteln geglättet oder bearbeitet werden.

Schleifmittel bestehen üblicherweise aus folgenden Grundkomponenten: der Unterlage, dem Schleifkorn und der Bindung, die unter Zuhilfenahme eines Bindemittelsystems gebildet wird.

Als Schleifkorn wird vor allem Aluminiumoxid (Korund), Siliciumcarbid, Siliciumdioxid wie Glas, Flint, polykristalline Materialien wie geschmolzene Oxide von Zirkonium und Aluminium oder Schmirgel verwendet. Die Auswahl und die Körnung der Schleifkörner hängt vom Anwendungszweck ab. Die Schleifkörner werden mittels Bindemittel auf der Unterlage befestigt. Das Bindemittel erstarrt und fixiert damit das Schleifkorn auf der Unterlage. Darauf wird üblicherweise eine Deckschicht, die ebenfalls ein Bindemittel enthält, aufgetragen. Man spricht daher von einer Grundbindung und einer Deckbindung.

Mittels der Grundbindung werden die Schleifkörner auf der Unterlage verankert, das heißt das Schleifkorn wird im wesentlichen nur mit seiner Grundfläche, also unmittelbar auf der Unterlage mit dieser verbunden, so daß sich die Schleifkörner nach außen in regellosen Höhen und Abständen erstrecken. Durch die Deckschicht oder Deckbindung werden die Schleifkörner befestigt, indem die Zwischenräume zwischen den Schleifkörnern verfüllt werden. Die Auftragmenge und somit die Schichtdicke richtet sich nach der Größe der Schleifkörner.

Man unterscheidet zwischen zwei unterschiedlichen Unterlagen, nämlich flexible oder starre Unterlagen. Als flexible Unterlagen werden z.B. Satingewebe, Gitterleinen, Faserverbunde, Papier oder Kombinationen aus diesen Materialien eingesetzt.

Die komplett konfektionierten Schleifmittel können beispielsweise in Form von Endlosbändern, Gurten oder Blättern Verwendung finden.

Die Schleifkörner können auch auf starre Unterlagen aufgebracht werden. Schleifmittel mit starren Unterlagen sind z.B. Schleifscheiben, Schleifbohrer, Abziehsteine oder Trennscheiben.

Zur Bindung der Schleifkörner auf der Unterlage steht eine breite Palette von Bindemitteln zur Verfügung. Als Bindemittel werden Systeme eingesetzt, die beispielsweise Leime oder Kunstharze, z.B. Alkydharze, Epoxydharze, Harnstoff-Formaldehydharze, vorzugsweise Phenolharze enthalten. Die Auswahl der Bindemittelsysteme kann variieren und richtet sich nach dem Anwendungsbereich der Schleifmittel. Diesen Bindemittelsystemen können unterschiedliche Hilfsstoffe zugesetzt werden, beispielsweise Pigmente, Antioxydationsmittel, Netzmittel oder Stabilisatoren. Die Palette der bekannten Hilfsstoffe ist groß und ebenfalls abhängig vom Verwendungszweck der Schleifmittel.

Die Schleifmittel haben anfänglich eine relativ hohe Schnittleistung. Während der Anwendung sinkt diese jedoch aus verschiedenen Gründen und erreicht schließlich einen Wert, bei dem die wirtschaftliche Anwendung nicht mehr gegeben ist und das Schleifmittel deshalb weggeworfen werden muss. Einer der Hauptgründe für das Absinken der Schnittleistung liegt darin, daß die während des Schleifvorganges freigelegte Metalloberfläche sehr reaktionsfähig ist. Diese frischen Metallflächen, insbesondere die abgeschliffenen Metallspäne, "verschweißen" mit dem Schleifmaterial. Man kann auch eine Oxidation der freigelegten Oberfläche beobachten, wobei die gebildete Metalloxidhaut oder -oxidschicht im allgemeinen härter als das nichtoxidierte Metall selbst ist. Das wiederum führt zu einer sehr starken Beanspruchung der Schleifkörner, verbunden mit einer Temperaturerhöhung. Man spricht in diesem Zusammenhang vom Heißlaufen der Schleifmittel.

Das Schleifkorn, welches sich am weitesten aus der Bindung erhebt, kommt zuerst mit der zu bearbeitenden Metallfläche in Berührung. Wenn dieses Schleifkorn nun sogenannte "Schweißverbindungen" bildet treten im zunehmendem Maße Reibungskräfte am Werkstück auf, wodurch das einzelne Schleifkorn gebrochen wird bzw. ausbricht. Je öfter das geschieht, desto mehr nimmt die schleifende Fläche ab und es werden die Schleifkörner wirksam, die sich nicht so stark aus der Deckschicht erheben. Die Schleiffläche nähert sich damit dem Trägermaterial, bzw. der Unterlage. Schließlich kommt es zu einem vollständigen Verschmieren der Schleiffläche. Das Verschmieren tritt andererseits auch oft auf obwohl ein beträchtlicher Teil der Schleifkörner noch nicht abgenutzt ist. Also wird ein Schleifmittel auch unbrauchbar, bevor die Brauchbarkeit des Schleifkornes selbst ausgeschöpft ist.

Zur Verbesserung der Schleifwirkung werden daher Bindemittelsysteme für die Deckschicht eingesetzt, die schleifaktive Füllstoffe, die unter anderem das Verschweißen verhindern sollen, enthalten. Die bekanntesten Füllstoffe sind einfache oder komplexe Metallhalogenide, wie Alkalihexafluoroaluminate, beispielsweise Natriumfluoroaluminat, insbesondere Kryolith, oder Alkalifluoroborate, wie Kaliumfluoroborat (US-PS 3 541 737; US-PS 3 997 302).

Die Aufgabe der Erfindung besteht darin, den Wirkungsgrad und damit verbunden die Standzeit der Schleifmittel zu verbessern.

Die Aufgabe wird dadurch gelöst, daß das Bindemittelsystem als schleifaktiven Füllstoff synthetische Alkalimetall- und/oder Erdalkalimetallfluoroaluminate enthält.

In einer bevorzugten Ausführungsform enthält das Bindemittelsystem synthetische Alkalimetall- und/oder Erdalkalimetallfluoroaluminate der allgemeinen Formel MₙAIF_{y}, in der M für Alkalimetall oder Erdalkalimetall steht, n kleiner oder gleich 2 ist und y gleich n+3 ist. Es können sowohl die reinen Verbindungen als auch die Mischungen der Verbindungen untereinander eingesetzt werden und im Bindemittelsystem enthalten sein.

Alkalimetalle im Sinne der Erfindung sind Lithium, Natrium, Kalium, Rubidium und Caesium. Vorzugsweise enthält das Bindemittelsystem als schleifaktiven Füllstoff Alkalimetalltetrafluoroaluminat, insbesondere Kaliumtetrafluoroaluminat (KAIF₄).

Eine Mischung aus Kaliumtetrafluoroaluminat und anderen schleifaktiven Füllstoffen, wie z.B. Alkalihexafluoroaluminat wie Kryolith und/oder Alkalitetrafluoroborat wie Kaliumtetrafluoroborat (KBF₄) und/oder Metallfluoriden beispielsweise Kaliumfluorid ist ebenfalls Gegenstand der Erfindung.

Die komplexen Metallfluoride erhält man in bekannter Weise beispielsweise durch Umsetzung von entsprechenden Aluminiumverbindungen mit Flußsäure unter Zugabe von entsprechenden Alkali- oder Erdalkalifluoriden, -carbonaten oder -hydroxiden.

Im Schleifprozess werden ca. 60% der Zerspanungsenergie in Wärmeenergie umgesetzt. Durch das Einbinden der schleifaktiven Füllstoffe in die Grund- oder Deckbindung wird die Spanbildung zeitlich begünstigt, so daß ein Teil der sonst durch Reibung verlorengegangenen Energie in Zerspanungsenergie umgewandelt werden kann.

Es wurde gefunden, daß durch die Zugabe von synthetischen Alkalimetalltetrafluoroaluminat als schleifaktiver Füllstoff die Schnittleistung und die Standzeit der Schleifmittel stärker verbessert werden kann als erwartet.

In einer Ausführungsform der Erfindung umfaßt das Schleifmittel ein flexibles Trägermaterial als Unterlage, einen Kleber, insbesondere ein duroplastisches Klebemittel als Grund- und Deckbindemittel sowie die Schleifkörner, wobei erfindungsgemäß der schleifaktive Füllstoff sowohl in der Grundbindung als auch in der Deckbindung oder nur in der Deckbindung enthalten sein kann.

Die Deckbindung besteht im wesentlichen aus einem polymeren, insbesondere einem elastomeren Material, das bei den relativ hohen Temperaturen während des Schleifens gut haftet und im gewünschtem Maß erweicht, ohne daß es sich ablöst. Derartige Polymerisate sind bekannt. In einer Ausführungsform wurden Bindemittelsysteme eingesetzt, deren pH-Wert im sauren Bereich liegt. Diese sauren Bindemittelsysteme haben den Vorteil, daß auch bei Zugabe von Füllstoffen keine gravierenden Viskositätsänderungen eintreten. Die Bindemittelsysteme können neben den Polymeren auch übliche Zusatzstoffe wie Pigmente, Antioxydationsmittel, Netzmittel oder Stabilisatoren enthalten. Üblicherweise werden in die Deckbindung die schleifaktiven Füllstoffe wie Kryolith oder Alkalifluoroborat in disperser Verteilung eingebracht.

Erfindungsgemäß werden in das Bindemittelsystem als schleifaktiver Füllstoff die synthetischen Alkalimetall- und/oder Erdalkalimetallfluoroaluminate gegebenenfalls in Kombination mit bekannten schleifaktiven Füllstoffen eingemischt oder dispergiert.

In einer Ausführungsform der Erfindung sind die schleifaktiven Füllstoffe sowohl in der Grundbindung als auch in der Deckbindung enthalten.

Die Deckbindung kann als einfache Schicht oder in Form einer "Multibindung" durch Auftragen einer zweiten Deckschicht erfolgen. Diese zweite Schicht kann ebenfalls die aktiven Füllstoffe enthalten. Der Zweck dieser "Multibindung" besteht darin, die aktiven Füllstoffe auch an den Spitzen des Schleifkornes zur Verfügung zu haben, um deren Eigenschaften schon zu einem frühen Zeitpunkt beim Schleifen nutzen zu können.

Die Bindemittelzusammensetzungen für die Grund- oder Deckbindung können sowohl identisch als auch unterschiedlich sein. Die Wahl der Zusammensetzungen richtet sich jeweils nach dem Anwendungszweck der Schleifmittel.

Die Menge des aufzutragenden Bindemittelsystems hängt von einer Reihe von Faktoren ab, z.B. von der Partikelgröße der Schleifkörner, der aufgebrachten Menge der Schleifkörner, also den Abständen der Schleifkörner, dem Feststoffgehalt des Bindemittelsystems usw. Es sollte in jedem Fall eine ausreichende Menge aufgetragen werden, damit während der Anwendung die Deckschicht der abzuschleifenden Fläche möglichst nahe kommt. Es ist nicht erwünscht, daß die Schleifkörner vollständig bedeckt werden. Das führt bekanntlich zu einem "Schmieren" auf der zu bearbeitenden Fläche und damit zu einem geringen oder gar keinem Materialabtrag. Die Spitzen der Schleifkörner müssen frei bleiben oder freigemacht werden. Ganz allgemein kann man sagen, daß bei gröberen Schleifkörnern eine größere Menge für die Deckschicht aufgetragen werden muss, als bei feineren Schleifkörnern. Die optimale Menge der Bindemittelsystemzusammensetzung lässt sich jedoch leicht ermitteln und ist nicht Gegenstand der Erfindung.

In einer Ausführungsform enthält die Deckbindung den schleifaktiven Füllstoff in einer Menge von maximal 60 Gew.-%, vorzugsweise 4 bis 45 Gew.-%, insbesondere 10 bis 45 Gew.-% (bezogen auf das Trockengewicht der Deckbindung). In einer anderen Ausführungsform wird Alkalimetalltetrafluoroaluminat, vorzugsweise Kaliumtetrafluoroaluminat, als schleifaktiver Füllstoff in der genannten Menge verwendet. Die zugesetzte Füllstoffmenge ist abhängig vom Feinheitsgrad (der Korngröße) des Füllstoffes.

Eine Mischung aus Kaliumtetrafluoroaluminat und den bekannten schleifaktiven Füllstoffen wie z.B. Kryolith und/oder Alkalifluoroborat wie Kaliumfluoroborat und/oder Metallfluoriden ist ebenfalls Gegenstand der Erfindung.

In einer bevorzugten Ausführungsform beträgt der Gewichtsanteil des erfindungsgemäßen schleifaktiven Füllstoffes 30 bis 45 Gew.-%, bezogen auf das Trockengewicht der Deckbindung.

In anderen Ausführungsfomen wurde als schleifaktiver Füllstoff eine Mischung aus synthetischen Kaliumtetrafluoroaluminat und Kryolith bzw. Kaliumtetrafluoroaluminat und Kaliumtetrafluoroborat in unterschiedlichen Mischungsverhältnissen, beispielsweise im Verhältnis 50 : 50, 40 : 60 oder 20 : 80 in das Bindemittelsystem dispergiert bzw. eingearbeitet. Die Mischungsverhältnisse können so gestaltet werden, daß die gesamte Bandbreite erfaßt wird.

Es wurde gefunden, daß eine erhebliche Verbesserung der Schleifleistung im Vergleich zu einer nur mit Kryolith als schleifaktiven Füllstoff versehenen Deckschicht erzielt wurde. Die Schleifleistung konnte allein durch die Zugabe von Kaliumtetrafluoroaluminat anstelle von Kryolith um 20 % verbessert werden. Bei Verwendung einer Mischung aus Kaliumtetrafluoroaluminat mit Kryolith betrug die Verbesserung der Abtragsleistung 60 %. Die Mischung aus Kaliumtetrafluoroaluminat mit Kaliumtetrafluoroborat führte sogar zu einer Steigerung der Abtragleistung von nahezu 150 % gegenüber einem Schleifmittel, welches Kryolith als schleifaktiven Füllstoff enthält.

Es wurde gefunden, daß durch die erfindungsgemäße Zugabe die Fließfähigkeit und die Benetzbarkeit des Bindemittelsystems positiv beeinflußt wurde. Bei Verwendung von Phenolharzbindemittelsystemen konnte außerdem eine positive Beeinflussung der Grenzflächeneigenschaften beobachtet werden. Es ist ebenfalls zu beobachten gewesen, daß bei der Verwendung von Phenolharzbindemittelsystemen eine stabile Farbmatrix erzielt werden kann, insbesondere wurde keine temperaturabhängige Farbveränderung des Bindemittelsystems beobachtet.

Die nachfolgenden Beispiele sollen die Erfindung erläutern, jedoch nicht einschränken.

### Beispiel 1 bis 5 :

Auf die Unterlage, ein imprägniertes Trägermaterial aus Baumwoll/PE-Gewebe, wurde der Grundbinder, ein Phenolharz, mittels einer Gummiwalze aufgetragen. Danach wurden die Schleifkörner in den noch feuchten Grundbinder aufgebracht. Nach der Trocknung wurde die Deckschicht, bestehend aus Phenolharz und Zusätzen aufgetragen. Als aktive Füllstoffe wurden Kaliumtetrafluoroaluminat, Kryolith, Kaliumtetrafluoroborat sowie deren Mischungen in das Bindmittelsystem der Deckschicht eingemischt. Metallplatten aus rostfreiem Stahl ST 37 wurden unter Standardbedingungen bei einem Anpressdruck von 2,5 bar geschliffen.

### Ergebnis:

| Beispiel | Deckschicht | Abtragsleistung % |
|---|---|---|
| 1 | Kein aktiver Füllstoff | 100 |
| 2 | Kryolith | 170 |
| 3 | KAIF4 | 200 |
| 4 | Kryolith/KAIF₄ 50:50 | 270 |
| 5 | KAIF₄/KBF₄ 50:50 | 420 |

Die Ergebnisse zeigen eine deutliche Verbesserung der Abtragsleistung. Ein weiterer Vorteil der erfindungsgemäßen schleifaktiven Füllstoffe besteht darin, daß durch deren Zugabe die Verfügbarkeit der Schleifmittel stark erhöht werden kann, also die Standzeit der Schleifmittel verlängert werden kann.

## Patentansprüche

1. Schleifmittelzusatz für ein Schleifmittel, umfassend Unterlage, Schleifkorn und Bindung, insbesondere Grund- und Deckbindung, **dadurch gekennzeichnet, daß** in der Bindung als Schleifmittelzusatz synthetisches Alkalimetall- und/oder Erdalkalimetallfluoroaluminat, enthalten ist.

2. Schleifmittelzusatz nach Anspruch 1, **dadurch gekennzeichnet, daß** in der Bindung als Schleifmittelzusatz Alkalimetallfluoroaluminat und/oder Erdalkalifluoroaluminat der allgemeinen Formel MₙAlF_{y}, in der M für Alkalimetall oder Erdalkalimetall steht, n kleiner oder gleich 2 ist und y gleich n+3 ist, enthalten ist.

3. Schleifmittelzusatz nach Anspruch 1, **dadurch gekennzeichnet, daß** in der Bindung als Schleifmittelzusatz Alkalimetalltetrafluoroaluminat und schleifaktive Füllstoffe z.B. Alkalihexafluoroaluminat wie Kryolith, Alkalifluoroborat wie Kaliumtetrafluoroborat oder Metallfluoride wie Kaliumfluorid enthalten sind.

4. Schleifmittelzusatz nach Anspruch 1, **dadurch gekennzeichnet, daß** als Alkalimetallfluoroaluminat, Alkalimetalltetrafluoroaluminat, vorzugsweise Kaliumtetrafluoroaluminat enthalten ist.

5. Schleifmittelzusatz nach Anspruch 1, **dadurch gekennzeichnet, daß** eine Mischung aus Kaliumtetrafluoroaluminat und Kryolith und/oder Kaliumtetrafluoroborat und/oder Kaliumfluorid enthalten ist.

6. Schleifmittelzusatz nach Anspruch 1, **dadurch gekennzeichnet, daß** in der Bindung, vorzugsweise in der Deckbindermischung, als Schleifmittelzusatz Alkalitetrafluoroaluminat in einer Menge von maximal 60 Gew.-%, vorzugsweise 4 bis 45 Gew.-%, bezogen auf das Trockengewicht der Deckbindermischung, enthalten ist.
